# EUROPÄISCHE PATENTANMELDUNG

(11) **EP 1 089 007 A2**
(43) Veröffentlichungstag der Anmeldung: **04.04.2001**
(21) Anmeldenummer: 00120280.3
(22) Anmeldetag: 28.09.2000
(51) Int. Cl.: F16D 55/227

(54) **Schiebesattel-Schreibenbremse**

(30) Priorität: 29.09.1999 DE 19946681; 29.09.1999 DE 19946677
(71) Anmelder: KNORR-BREMSE Systeme für Nutzfahrzeuge GmbH, 80809 München (DE)
(72) Erfinder: Iraschko, Johann, 85301 Schweitenkirchen (DE)

(57) **Zusammenfassung**

Eine Schiebesattel-Scheibenbremse, insbesondere eine pneumatisch betätigte Schiebesattel-Scheibenbremse für Nutzfahrzeuge, weist einen Schiebesattel (4) auf, der relativ zu einem Bezugselement, vorzugsweise relativ zu einem Bremsträger (8), verschieblich geführt ist. Dazu ist zwischen dem Bremssattel (4) und dem Bezugselement ― vorzugsweise dem Bremsträger (8) - eine Sattellagereinrichtung (27) angeordnet, die in wenigstens zwei Lager-Funktionsbereiche (10, 12, 14) unterteilt ist. Vorzugsweise hat einer der Lager-Funktionsbereiche (14) einen Reibwert, der (deutlich) niedriger ist als der Reibwert eines zweiten Lager-Funktionsbereiches (10, 12).

## Beschreibung

Die Erfindung betrifft eine Schiebesattel-Scheibenbremse, insbesondere eine pneumatisch betätigte Schiebesattel-Scheibenbremse für Nutzfahrzeuge, mit einem Schiebesattel, der relativ zu einem Bezugselement, vorzugsweise relativ zu einem Brems-träger, verschieblich geführt ist, wozu zwischen dem Bremssattel und dem Bezugselement ― vorzugsweise dem Bremsträger ― wenigstens eine Sattellagereinrichtung angeordnet ist.

Bei Teilbelag-Scheibenbremsen gibt es zwei wesentliche Bauformen: die Festsattelbremse und die Schwimmsattel- oder Schiebesattelscheibenbremse. Pneumatisch betätigte Scheibenbremsen werden im allgemeinen als Schiebesattel-Scheiben-bremsen ausgeführt, um den beengten Bauraumverhältnissen an modernen Nutzfahrzeugen gerecht zu werden.

Eine gattungsgemäße Scheibenbremse ist aus der DE 40 32 886 A1 bekannt. Die in dieser Schrift gezeigte Teilbelag-Scheibenbremse mit Schiebesattel verfügt über eine Zuspannvorrichtung, welche bei Beaufschlagung eines pneumatisch betätigten Bremszylinders mit Druckluft über einen Drehhebel mit Exzenter und eine dem Exzenter nachgeschaltete Traverse zwei zueinander parallele Druckstücke in Richtung einer Bremsbacke vorschiebt. Der am Bremsträger befestigte Bremssattel wird bei der Zuspannung der Bremse infolge der bei der Bremsung auftretenden Reaktionskräfte an zwei Sattelführungen entgegen der Zuspannrichtung der Druckstücke bewegt, wodurch der auf der gegenüberliegenden Seite der Bremsscheibe befindliche Bremsbelag ebenfalls an die Bremsscheibe gepreßt wird.

Zur Erzielung eines möglichst gleichmäßigen Belagverschleißes an den beiden einander auf den zwei Seiten der Bremsscheibe gegenüberliegenden Bremsbelägen (in Hinsicht auf den auf der Seite der Zuspannvorrichtung liegenden Bremsbelag spricht man auch vom 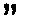 inneren" Bremsbelag, wogegen der auf der gegenüberliegenden Seite der Bremsscheibe liegende Bremsbelag den 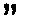 äußeren" Bremsbelag bildet) muß die Sattelführung relativ zum Bremsträger sehr leichtgängig sein. Um diese Leichtgängigkeit möglichst während der gesamten Lebensdauer der Bremse zu gewährleisten, ist es erforderlich, die Sattellagerung abzudichten bzw. gegen das Eindringen von Wasser, Schmutz und sonstigen Medien zu schützen. Die Abdichtung erfolgt i.allg. durch Elastomerelemente, die durch die bei Bremsungen auftretenden Temperaturen sowie durch mechanische Belastungen stark beansprucht werden.

Die Erfindung zielt daher darauf ab, die Sattelführung des gattungsgemäßen Standes der Technik mit geringem konstruktiven Aufwand derart weiterzuentwickeln, daß die Zuverlässigkeit, die Robustheit und die Funktionssicherheit der Sattelführung bzw. der Sattellagereinrichtung zwischen dem Bremssattel und dem Bezugselement gegenüber dem gattungsgemäßen Stand der Technik erhöht wird.

Die Erfindung erreicht dieses Ziel durch den Gegenstand des Anspruches 1. Gegenüber dem Stand der Technik ist dabei die Sattellagereinrichtung zwischen dem Bremssattel und dem Bezugselement ― vorzugsweise dem Bremsträger ― in wenigstens zwei separate Lager-Funktionsbereiche unterteilt. Diese Unterteilung der Sattellagereinrichtung (nicht zu verwechseln mit dem Vorsehen zweier voneinander getrennter Sattellagereinrichtungen) in zwei Lager-und/oder Buchsen-Funktionsbereiche ― vorzugsweise mit stark unterschiedlichen Reibbwerten - hat folgenden Effekt. Das erste Lager - mit dem geringeren Reibwert - ermöglicht die Relativbewegungen zwischen dem Bremssattel und dem Bremsträger während des Funktionshubes der Bremse. Das zweite Lager - mit dem höheren Reibwert - ermöglicht dagegen die Überbrückung des Bremsbelag-Verschleißweges. Das Lager mit dem geringeren Reibwert hat somit nur einen relativ zum Verschiebeweg des zweiten Lagers kurzen Verschiebeweg zu überbrücken und kann daher auf einfache Weise zuverlässig abgedichtet werden. Das zweite Lager benötigt dagegen keine derartige Abdichtung, da eine besondere Leichtgängigkeit zur Durchführung der 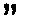 Sattelnachstellung" infolge Bremsbelagverschleißes nicht erforderlich ist. Die Erfindung eignet sich auch für hydraulisch oder elektromechanisch betätigte Schwimmsattelbremsen.

Vorzugsweise überbrückt der erste Lager-Funktionsbereich bei einer besonders bevorzugten Ausführungsform der Erfindung einen Verschiebeweg, der im wesentlichen dem Verstellweg des Bremssattels relativ zum Bremsträger während des Funktionshubes der Bremse entspricht. Dieser Verstellweg ist sehr kurz bemessen, so daß das erste Lager besonders leicht abgedichtet werden kann.

Zur Realisierung des ersten Lager-Funktionsbereiches eignet sich ein leichtgängiges, handelsübliches Gleitlager, dessen axiale Endbereiche vorzugsweise durch zwischen der inneren und der äußeren Führungsbuchse festgelegte, im wesentlichen balgartige, Elastomerelemente abgedichtet werden.

Vorzugsweise weist ferner der weitere Lager-Funktionsbereich der Sattellagereinrichtung einen Verschiebeweg auf, der im wesentlichen dem Weg des maximal zulässigen Bremsbelagverschleiß entspricht.

Zur Realisierung des weiteren Lager-Funktionsbereiches eignet sich eine kostengünstige und nicht separat abzudichtende Elastomer- und/oder Kunststoffbuchse, die auf einer Führungsbuchse verschieblich geführt ist.

Bei einer alternativen Ausführungsform der Erfindung weist eine der Führungsbuchsen einen Kragenansatz auf, der das vom Bremsträger abgewandte Ende des Schraubbolzens einfaßt, wobei der Kragenansatz von einer Abdeckkappe verschlossen wird. Auch mit dieser Variante der Erfindung wird eine besonders unkomplizierte Abdichtung der Gleitlagerung realisiert.

Gegenüber dem Stand der Technik ist dabei die Sattellagereinrichtung zwischen dem Bremssattel und dem Bezugselement ― vorzugsweise dem Bremsträger ― in wenigstens zwei (separate) Lager- und/oder Buchsen-Funktionsbereiche unterteilt, wobei einem der Lager- und/oder Buchsen-Funktionsbereiche eine Rückstelleinrichtung zur Unterstützung des Rückstellens des Bremssattels nach einer Zuspannbewegung zugeordnet ist.

Diese Unterteilung der Sattellagereinrichtung - nicht zu verwechseln mit zwei zueinander parallelen Sattelführungen - in zwei Lager- und/oder Buchsen-Funktionsbereiche ― vorzugsweise mit stark unterschiedlichen Reibwerten - hat folgenden Effekt. Das erste Lager - mit dem geringeren Reibwert - ermöglicht die Relativbewegungen zwischen dem Bremssattel und dem Bremsträger während des Funktionshubes der Bremse. Das zweite Lager - mit dem höheren Reibwert - ermöglicht dagegen die Überbrückung des Bremsbelag-Verschleißweges. Das Lager mit dem geringeren Reibwert hat somit nur einen relativ zum Verschiebeweg des zweiten Lagers kurzen Verschiebeweg zu überbrücken und kann daher auf einfache Weise zuverlässig abgedichtet werden. Das zweite Lager benötigt dagegen keine derartige Abdichtung, da eine besondere Leichtgängigkeit zur Durchführung der 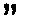 Sattelnachstellung" infolge Bremsbelagverschleißes nicht erforderlich ist. Mittels einer integrierten Rückstelleinrichtung ― einfach zu realisieren als Teller- oder Schraubenfeder ― wird der Bremssattel beim Lösen der Bremse in seine Ausgangsstellung zurückgeführt. Diese Rückstelleinrichtung unterstützt die Rückstellung des Bremssattels beim Bremsenlösen. Die Erfindung ist für Schiebesattel-Scheibenbremsen verschiedenster Art geeignet - z.B. auch für hydraulische und elektromagnetisch betätigte Schiebesattel-Scheibenbremsen - und nicht auf den Anwendungsfall 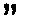 pneumatisch betätigte Scheibenbremse" beschränkt.

Vorzugsweise überbrückt der erste Lager- und/oder Buchsen-Funktionsbereich bei einer besonders bevorzugten Ausführungsform der Erfindung einen Verschiebeweg, der im wesentlichen dem Verstellweg des Bremssattels relativ zum Bremsträger während des Funktionshubes der Bremse entspricht. Dieser Verstellweg ist sehr kurz bemessen ― insbesondere wenn sich das Lüftspiel auf beide Bremsbeläge etwa gleich verteilt - so daß das erste Lager besonders leicht abgedichtet werden kann.

Vorzugsweise weist ferner der weitere Lager- und/oder Buchsen-Funktionsbereich der Sattellagereinrichtung einen Verschiebeweg auf, der im wesentlichen dem Weg des maximal zulässigen Bremsbelagverschleißes entspricht.

Zur Realisierung des weiteren Lager- und/oder Buchsen-Funktionsbereiches eignet sich eine kostengünstige und nicht separat abzudichtende Elastomer- und/oder Kunststoffbuchse, die auf einer Führungsbuchse verschieblich geführt ist.

Weitere vorteilhafte Ausgestaltungen der Erfindung sind den übrigen Unteransprüchen zu entnehmen.

Nachfolgend wird die Erfindung unter Bezug auf die Zeichnung anhand von Ausführungsbeispielen näher beschrieben. Es zeigt:
Fig. 1 eine teilgeschnittene Ansicht einer erfindungsgemäßen Schiebesattel-Scheibenbremse, und
Fig. 2 eine teilgeschnittene Ansicht eines weiteren Ausführungsbeispiels einer erfindungsgemäßen Schiebesattel-Scheibenbremse.

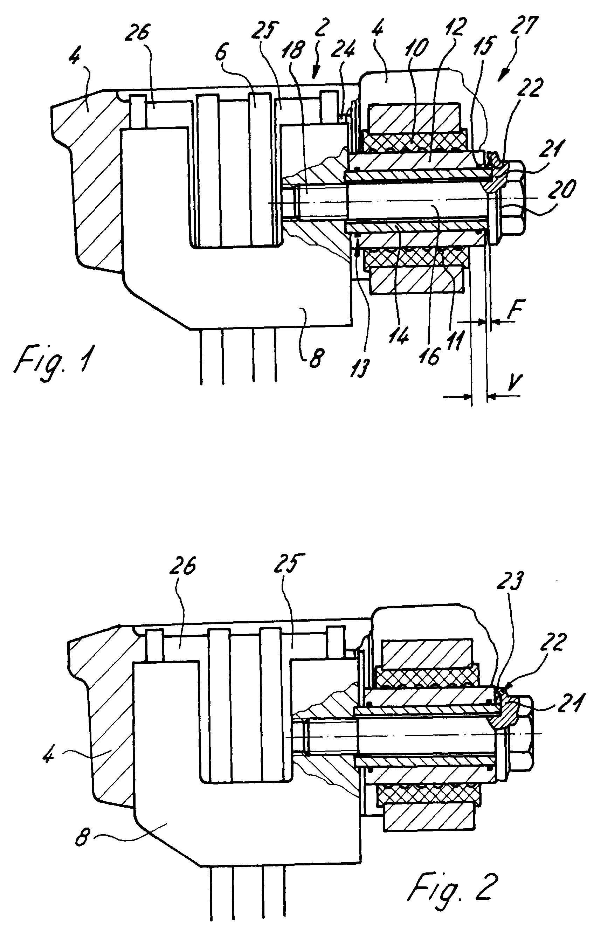

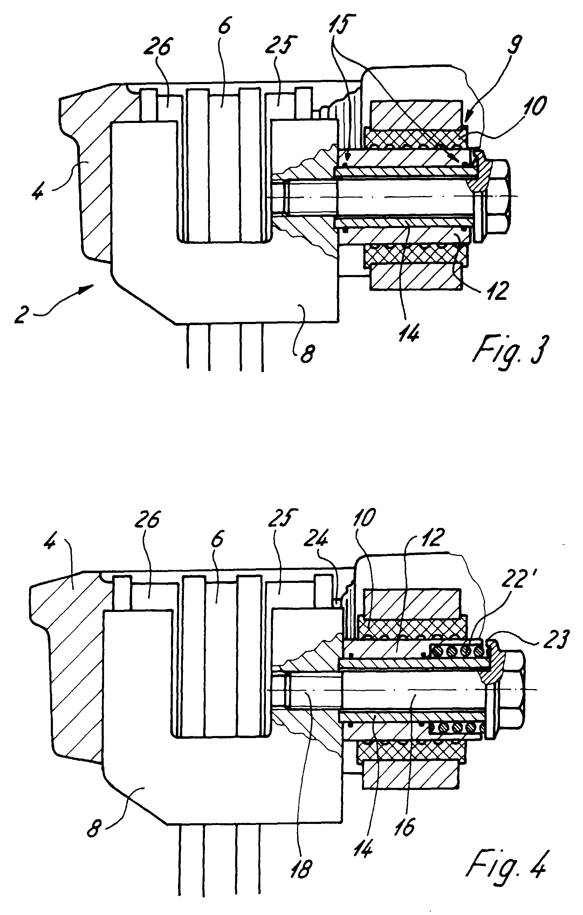

Fig. 1 zeigt eine Schiebesattel-Scheibenbremse 2, die eine (hier nicht dargestellte) pneumatisch betätigte Zuspanneinrichtung aufweisen kann. Die Scheibenbremse 2 weist einen Bremssatte! 4 auf, der rahmenartig eine Bremsscheibe 6 umgreift. Der Bremssattel 4 ist relativ zu einem Bremssträger 8 verschieblich geführt. Hierzu weist der Bremssattel 4 eine Bohrung 9 auf, in welche eine Elastomer- und/oder Kunststoffbuchse 10 eingesetzt ist, die auf einer zur Elastomer- und/oder Kunststoffbuchse 10 konzentrischen, ersten Führungsbuchse 12 sitzt. Die Elastomer- und/oder Kunststoffbuchse 10 ist an ihrem Innenumfang mit einer Profilierung 11 versehen und an ihrem Außenumfang im Bremssattel 4 fixiert. Die Profilierung 11 ermöglicht eine gezielte Einstellung des Reibwertes zwischen der Elastomerbuchse 10 und der ersten Führungsbuchse 12.

Die erste Führungsbuchse 12 sitzt wiederum auf einem inneren, zur äußeren Führungsbuchse konzentrischen Gleitlager 14, hier mit äußerem Lagerabschnitt 14a und innerem Lagerabschnitt 14b. Das Gleitlager 14 ist seinerseits auf eine innere, zweite Führungsbuchse 16 aufgeschoben, die mittels eines Schraubbolzens 18 mit einem Bolzenkopf 20 am Bremsträger 6 verspannt ist. Die Buchse 12 und das Lager 14 können alternativ auch zu einem Element zusammengefaßt werden (hier nicht dargestellt).

Die Funktion dieser Bremse ist wie folgt. Bei einer Bremsung wird von der - hier nicht dargestellten - Zuspannvorrichtung ein Druckstück 22 ggf. zusammen mit einem weiteren Druckstück in Richtung der Bremsscheibe 6 bewegt, wodurch der Bremsbelag 24 gegen die Bremsscheibe 6 gepreßt wird. Da der Bremssattel 4 am Bremsträger 8 verschieblich geführt ist, wird infolge der auftretenden Reaktionskräfte der Bremssattel 4 entgegen der Richtung der Zuspannbewegung des Bremsbelages 24 bewegt. Dadurch zieht der Sattel 4 den zweiten Bremsbelag 26 auf der gegenüberliegenden Seite der Bremsscheibe 6 ebenfalls gegen die Bremsscheibe. Die Bremse spannt also beidseits der Bremsscheibe 6 zu.

Die Bewegung des Schiebesattels 4 kann im wesentlichen in zwei Bewegungsphasen unterteilt werden. Die erste dieser Phasen ergibt sich durch den sogenannten Funktionshub der Bremse. Diese ist die eigentliche Zuspannbewegung F. Die zweite dieser Phasen entspricht der Sattelbewegung infolge des Bremsbelagverschleißes. Das ist der 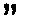 Verschleißweg V". Die zweite Phase dient also dem Ausgleich des Bremsbelagverschleißes des der Zuspanneinrichtung gegenüberliegenden zweiten Bremsbelages 26.

Der Funktionshub F wird bei jeder Bremszuspannung überbrückt. Der Funktionshub F setzt sich aus dem Lüftspiel des äußeren Bremsbelages 26 und den weitgehend elastischen Verformungen der Bremsbeläge 26, des Bremssattels 4 und ggf. weiterer im Kraftfluß befindlicher Teile zusammen. Der Funktionshub F ist im allgemeinen relativ klein. Damit der äußere, d.h. der im Bezug zur Zuspannvorrichtung auf der gegenüberliegenden Seite der Bremsscheibe 6 liegende Bremsbelag 26 beim Lösen der Bremse frei wird, muß der Bremssattel 4 mit einer möglichst geringen Kraft in seine Ausgangsstellung zurückgeschoben werden. Dies wird durch das Gleitlager 14 in hervorragender Weise gewährleistet.

Die Verschleißwegverstellung des Bremssattels 4 erfolgt dagegen nur in einer Richtung. Tritt am äußeren Bremsbelag 26 Verschleiß auf, muß der Bremssattel 4 um eben diesen Weg ― also um das Verschleißmaß - nachrutschen. Die Reibung der Sattellagerung spielt dabei nur eine untergeordnete Rolle, da aufgrund der großen Zuspannkräfte genügend Kraftreserven zur Überwindung der Lagerreibung gegeben sind. Der maximale Verschleißweg V ist im Vergleich zum Weg des Funktionshubes F relativ groß, denn er entspricht dem maximalen Verschleißmaß des äußeren Bremsbelages 26.

Die Erfindung nutzt entsprechend zu den vorstehenden Ausführungen im Gegensatz zum Stand der Technik zur Durchführung der Sattel-Verschiebung eine (oder zwei zueinander parallele) 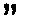 mehrstufige" Sattellagereinrichtung(en) 27. Die Erfindung setzt die Bewegung zwischen dem Bremssattel 4 und dem Bremsträger 8 dabei in zwei Bewegungsphasen um. Dies erreicht die Erfindung durch die Unterteilung der Sattellagereinrichtung in zwei Lager-Funktionsbereiche mit unterschiedlichen Reibwerten. Der erste Lager-Funktionsbereich ― das Gleitlager 14 nebst den inneren und den äußeren Scheiben 28 - ermöglicht die Überbrückung des Funktionshubes F. Die Elastomer- und/oder Kunststoffbuchse 10 ermöglicht als zweiter Lagerbereich im Zusammenspiel mit der Führungsbuchse 12 die Nachstellung des Verschleißes des Bremsbelages 26.

Die Gleitlagerung 14 weist einen möglichst geringen Reibwert auf, um das Lösen der Bremse nicht zu behindern. Die äußere Führungsbuchse 12 ist um das Maß des Funktionshubes F auf der inneren Führungsbuchse 16 verschieblich ggf. zusammen mit axialen Endringen oder ―scheiben 28. Dadurch kann die äußere Führungsbuchse auf der inneren Führungsbuchse um das Maß des Brems-Funktionshubes F verschoben werden.

Eine zweite Lagereinrichtung der Sattellagereinrichtung dient zur Realisierung des Verschleißweges. Diese zweite Lagereinrichtung wird aus der äußeren Führungsbuchse 12 und der Elastomer- und/oder Kunststoffbuchse 10 gebildet. Die Elastomer- und/oder Kunststoffbuchse ist ungefähr um den Weg des maximalen Bremsbelagverschleißes V kürzer als die äußere Führungsbuchse 12.

Die Abdichtung des relativ leichtgängigen Gleitlagers 14 nach außen erfolgt über Dichtungselemente - z.B. Dichtungsringe oder Faltenbälge 29 -, die zwischen den axialen Endbereichen der inneren und der äußeren Führungsbuchse 12, 16 vorgesehen sind - z.B. befestigt am Innenumfang der Buchse 12 und am Außenumfang der Buchse 16 oder an an den axialen Enden der Buchse 16 vorgesehenen ringen oder Scheiben 17 - und derart dimensioniert bzw. balgartig ausgelegt sind, daß sie den Verstellweg der Führungsbuchsen 12, 16 relativ zueinander - also den Funktionshub F - überbrücken können. Der Verschiebeweg der Führungsbuchse 12 auf dem Bolzen 20 wird durch die Differenz aus der Länge der Führungsbuchse 12 und dem Abstand zwischen dem Bremsträger 4 und dem Bolzenkopf 20 (also die Bolzenlänge) begrenzt. Die Elastomer- und/oder Kunststoffbuchse 10 ist dagegen auf dem Führungsbolzen 12 quasi 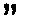 anschlagsfrei" verschieblich.

Von der Variante der Fig. 1 unterscheidet sich das Ausführungsbeispiel der Fig. 2 durch die Art der axialen Abdichtung des Gleitlagers 14. Zunächst weist die äußere Führungsbuchse 12 eine axial abgestufte zentrale Bohrung 12' auf. Von dieser dient ein erster Bereich mit einem geringeren Durchmesser zur Aufnahme des Gleitlagers und der inneren Führungsbuchse 16. In einem Bereich größeren Durchmessers steht die äußere Führungsbuchse 12 ferner kragenartig über den Kopf 20 des Schraubbolzens 16 vor. Die eigentliche Abdichtung gegen äußere Feuchtigkeit erfolgt dann durch eine Abdeckkappe 30 (z.B. aus Gummi), welche in den axial vorstehenden Kragenansatz 32 der äußeren Führungsbuchse 12 eingesteckt ist.

### Bezugszeichen

- Schiebesattel-Scheibenbremse: 2
- Bremssattel: 4
- Bremsscheibe: 6
- Bremssträger: 8
- Bohrung: 9
- Elastomer- und/oder Kunststoffbuchse: 10
- Profilierung: 11
- Führungsbuchse: 12
- Gleitlager: 14
- äußerer Lagerabschnitt: 14a
- innerer Lagerabschnitt: 14b
- Führungsbuchse: 16
- Scheiben: 17
- Schraubbolzens: 18
- Bolzenkopf: 20
- Druckstück: 22
- Bremsbelag: 24
- Bremsbelag: 26
- Sattellagereinrichtung: 27
- Endringe oder ―scheiben: 28
- Dichtungselemente: 29
- Abdeckkappe: 30
- Kragenansatz: 32
- Verschleißweg: V
- Funktionshub: F

## Patentansprüche

1. Schiebesattel-Scheibenbremse, insbesondere pneumatisch betätigte Schiebesattel-Scheibenbremse für Nutzfahrzeuge, mit einem Schiebesattel (4), der relativ zu einem Bezugselement, vorzugsweise relativ zu einem Bremsträger (8), verschieblich geführt ist, wozu zwischen dem Bremssattel (4) und dem Bezugselement ― vorzugsweise dem Bremsträger (8) ― wenigstens eine Sattellagereinrichtung (27) angeordnet ist,
dadurch gekennzeichnet, daß
die wenigstens eine Sattellagereinrichtung (27) zwischen dem Bremssattel (4) und dem Bezugselement ― vorzugsweise dem Bremsträger (8) ― in wenigstens zwei Lager- und/oder Buchsen-Funktionsbereiche (10, 12, 14) unterteilt ist, wobei einem der Lager- und/oder Buchsen-Funktionsbereiche (12, 14) eine Rückstelleinrichtung (22) zur Unterstützung des Rückstellens des Bremssattels (4) nach einer Zuspannbewegung zugeordnet ist.

2. Schiebesattel-Scheibenbremse nach Anspruch 1, dadurch gekennzeichnet, daß die Rückstelleinrichtung als Rückstellfeder (22) ausgebildet ist.

3. Schiebesattel-Scheibenbremse nach Anspruch 2, dadurch gekennzeichnet, daß die Rückstellfeder eine Gummifeder und/oder eine Tellerfeder (22) und/oder oder eine Schraubenfeder (22') ist.

4. Schiebesattel-Scheibenbremse nach Anspruch 1, dadurch gekennzeichnet, daß der erste Lager- und/oder Buchsen-Funktionsbereiche (12, 14) einen Reibwert aufweist, der wesentlich niedriger ist als der Reibwert des weiteren Lager- und/oder Buchsen-Funktionsbereiches (10, 12).

5. Schiebesattel-Scheibenbremse nach Anspruch 1 oder 2, dadurch gekennzeichnet, daß der erste Lager- und/oder Buchsen-Funktionsbereich (12) einen Verschiebeweg aufweist, der im wesentlichen dem Verstellweg des Bremssattels (4) relativ zum Bremsträger (8) während des Funktionshubes (F) der Bremse entspricht.

6. Schiebesattel-Scheibenbremse nach einem der vorstehenden Ansprüche, dadurch gekennzeichnet, daß der zweite Lager- und/oder Buchsen-Funktionsbereich (10, 12) einen Verschiebeweg aufweist, der im wesentlichen dem maximal zulässigen Verschleißweg (V) der Bremsbeläge entspricht.

7. Schiebesattel-Scheibenbremse nach einem der vorstehenden Ansprüche, dadurch gekennzeichnet, daß der zweite Lager- und/oder Buchsen-Funktionsbereich eine Elastomer- und/oder Kunststoffbuchse (10) und eine zur Elastomer- und/oder Kunststoffbuchse (10) konzentrische erste Führungsbuchse (12) aufweist.

8. Schiebesattel-Scheibenbremse nach einem der vorstehenden Ansprüche, dadurch gekennzeichnet, daß die Elastomer- und/oder Kunststoffbuchse (10) ―an ihrem Innenumfang mit einer Profilierung (11) versehen und/oder an ihrem Außenunifang im Bremssattel fixiert ist.

9. Schiebesattel-Scheibenbremse nach einem der vorstehenden Ansprüche, dadurch gekennzeichnet, daß der erste Lager- und/oder Buchsen-Funktionsbereich wenigstens eine weitere, zur ersten Führungsbuchse (12) konzentrische Führungsbuchse (14) aufweist, welche relativ zur ersten Führungsbuchse (12) verschieblich geführt ist.

10. Schiebesattel-Scheibenbremse nach einem der vorstehenden Ansprüche, dadurch gekennzeichnet, daß zwischen die zueinander konzentrischen Führungsbuchsen (14, 12) Dichtelemente (15) gesetzt sind.

11. Schiebesattel-Scheibenbremse nach einem der vorstehenden Ansprüche, dadurch gekennzeichnet, daß die Dichtelemente (15) in Umlaufnuten (13) am Innenumfang der äußeren Führungsbuchse (12) gesetzt sind.

12. Schiebesattel-Scheibenbremse nach einem der vorstehenden Ansprüche, dadurch gekennzeichnet, daß die Dichtelemente (15) als Dichtringe oder Dichtbälge ausgebildet sind.

13. Schiebesattel-Scheibenbremse nach einem der vorstehenden Ansprüche, dadurch gekennzeichnet, daß der erste Lager- und/oder Buchsen-Funktionsbereich aus den gegeneinander verschieblichen Führungsbuchsen (12, 14) gebildet wird.

14. Schiebesattel-Scheibenbremse nach einem der vorstehenden Ansprüche, dadurch gekennzeichnet, daß der zweite Lager- und/oder Buchsen-Funktionsbereich (10, 12) gegen eine Reibkraft verschieblich ist, die größer ist als die zum Spannen der Rückstellfeder (22) notwendige Federkraft.

15. Schiebesattel-Scheibenbremse nach einem der vorstehenden Ansprüche, dadurch gekennzeichnet, daß der erste Lager- und/oder Buchsen-Funktionsbereich (12, 14) gegen eine Reibkraft verschieblich ist, die kleiner ist als die zum Spannen der Rückstellfeder (22) notwendige Federkraft.

16. Schiebesattel-Scheibenbremse nach einem der vorstehenden Ansprüche, dadurch gekennzeichnet, daß wenigstens eine der zueinander konzentrischen Führungsbuchsen (14,16) mittels eines Bolzens (18) am Bremsträger (8) festgelegt ist.

17. Schiebesattel-Scheibenbremse nach einem der vorstehenden Ansprüche, dadurch gekennzeichnet, daß der Bolzen (18) und oder eine weitere Führungsbuchse (16) auf dem Bolzen (18) einen scheibenartigen, radialen Ansatz (21) aufweist.

18. Schiebesattel-Scheibenbremse nach einem der vorstehenden Ansprüche, dadurch gekennzeichnet, daß die Rückstellfeder (22, 22') zwischen ein axiales Ende der Führungsbuchse (12) und den radialen Ansatz (21) oder einen Bund (23) am radialen Ansatz (21) gesetzt ist.

19. Schiebesattel-Scheibenbremse nach einem der vorstehenden Ansprüche, dadurch gekennzeichnet, daß der Verschiebeweg der Führungsbuchse (12) auf dem Bolzen (18) durch die Differenz der Länge der Führungsbuchse und dem Abstand zwischen dem Bremsträger und dem Bund (23) begrenzt ist und/oder daß die Elastomer- und/oder Kunststoffbuchse (10) auf dem Führungsbolzen (12) anschlagsfrei verschieblich ist.

20. Schiebesattel-Scheibenbremse, insbesondere pneumatisch betätigte Schiebesattel-Scheibenbremse für Nutzfahrzeuge, mit einem Schiebesattel (4), der relativ zu einem Bezugselement, vorzugsweise relativ zu einem Bremsträger (8), verschieblich geführt ist, wozu zwischen dem Bremssattel (4) und dem Bezugselement ― vorzugsweise dem Bremsträger (8) ― wenigstens eine Sattellagereinrichtung (27) angeordnet ist,
dadurch gekennzeichnet, daß
die wenigstens eine Sattellagereinrichtung (27) zwischen dem Bremssattel (4) und dem Bezugselement ― vorzugsweise dem Bremsträger (8) ― in wenigstens zwei Lager-(und/oder Buchsen-)Funktionsbereiche (10, 12, 14) unterteilt ist.

21. Schiebesattel-Scheibenbremse nach Anspruch 20, dadurch gekennzeichnet, daß einer der Lager-Funktionsbereiche (14) einen Reibwert aufweist, der wesentlich niedriger ist als der Reibwert eines weiteren Lager-Funktionsbereiches (10, 12).

22. Schiebesattel-Scheibenbremse nach Anspruch 20 oder 21, dadurch gekennzeichnet, daß der erste Lager-Funktionsbereich (12) einen Verschiebeweg aufweist, der im wesentlichen dem Verstellweg des Bremssattels (4) relativ zum Bremsträger (8) während des Funktionshubes (F) der Bremse entspricht.

23. Schiebesattel-Scheibenbremse nach Anspruch 20, 21 oder 22, dadurch gekennzeichnet, daß der erste Lager-Funktionsbereich als Gleitlager (14) ausgebildet ist.

24. Schiebesattel-Scheibenbremse nach einem der Ansprüche 20 bis 23, dadurch gekennzeichnet, daß der zweite Lager-Funktionsbereich (10, 12) einen Verschiebeweg aufweist, der im wesentlichen dem maximal zulässigen Verschleißweg (V) der Bremsbeläge entspricht.

25. Schiebesattel-Scheibenbremse nach Anspruch 24, dadurch gekennzeichnet, daß der zweite Lager-Funktionsbereich eine Elastomer- und/oder Kunststoffbuchse (10) und eine zur Elastomer- und/oder Kunststoffbuchse (10) konzentrische erste Führungsbuchse (12) aufweist.

26. Schiebesattel-Scheibenbremse nach einem der Ansprüche 20 bis 25, dadurch gekennzeichnet, daß die Elastomer- und/oder Kunststoffbuchse (10) an ihrem Innenumfang mit einer Profilierung (11) versehen und/oder an ihrem Außenumfang im Bremssattel fixiert ist.

27. Schiebesattel-Scheibenbremse nach einem der Ansprüche 20 bis 26, dadurch gekennzeichnet, daß die Lagereinrichtung wenigstens eine zur ersten Führungsbuchse (12) konzentrische weitere Führungsbuchse (16) aufweist.

28. Schiebesattel-Scheibenbremse nach einem der Ansprüche 20 bis 27, dadurch gekennzeichnet, daß wenigstens eine der zueinander konzentrischen Führungsbuchsen (16) mittels eines Bolzens (18) am Bremsträger (8) befestigt ist.

29. Schiebesattel-Scheibenbremse nach einem der Ansprüche 20 bis 28, dadurch gekennzeichnet, daß die axialen Enden des Gleitlagers (14) nach außen abgedichtet sind.

30. Schiebesattel-Scheibenbremse nach einem der Ansprüche 20 bis 29, dadurch gekennzeichnet, daß die axiale Abdichtung des Gleitlagers (14) durch zwischen der inneren und der äußeren Führungsbuchse (10, 16) festgelegte, im wesentlichen balgartige, Dichtungselemente (29) erfolgt.

31. Schiebesattel-Scheibenbremse nach einem der Ansprüche 20 bis 30, dadurch gekennzeichnet, daß die äußere Führungsbuchse (12) einen Kragenansatz (32) aufweist, der das vom Bremsträger (8) abgewandte Ende des Schraubbolzens (18) einfaßt, wobei der Kragenansatz (32) von einer Abdeckkappe (30) verschlossen ist.

32. Schiebesattel-Scheibenbremse nach einem der Ansprüche 20 bis 31, dadurch gekennzeichnet, daß der Verschiebeweg der Führungsbuchse (12) auf dem Bolzen (18) durch die Differenz aus der Länge der Führungsbuchse und dem Abstand zwischen dem Bremsträger und dem Bolzenkopf (20) begrenzt ist und/oder daß die Elastomer- und/oder Kunststoffbuchse (10) auf dem Führungsbolzen (12) anschlagsfrei verschieblich ist.
